(19) Europäisches Patentamt
European Patent Office
Office européen des brevets

(11) EP 0 387 609 B1

(12) EUROPEAN PATENT SPECIFICATION

(45) Date of publication and mention of the grant of the patent:
**15.01.1997 Bulletin 1997/03**

(51) Int Cl.[6]: **C08F 10/04**, C08F 10/14, C08F 4/602

(21) Application number: **90103918.0**

(22) Date of filing: **28.02.1990**

# (54) Alpha-olefin polymers with syndiotactic structure

Alpha-olefinpolymere mit syndiotaktischer Struktur

Polymères d'alpha-oléfines à structure syndiotactique

(84) Designated Contracting States:
**BE DE FR GB IT NL**

(30) Priority: **28.02.1989 IT 1958989**

(43) Date of publication of application:
**19.09.1990 Bulletin 1990/38**

(73) Proprietor: **Montell Technology Company bv**
**2132 MS Hoofddorp (NL)**

(72) Inventors:
- **Albizzati, Enrico, Dr.-Biol.**
  **I-28041 Arona, Novara (IT)**
- **Resconi, Luigi, Dr.-Chem.**
  **I-20124 Milano (IT)**
- **Zambelli, Adolfo, Dr.-Chem.**
  **I-80055 Portici, Napoli (IT)**

(74) Representative: **Zumstein, Fritz, Dr. et al**
**Patentanwälte,**
**Dr. F. Zumstein,**
**Dipl.-Ing. F. Klingseisen,**
**Bräuhausstrasse 4**
**80331 München (DE)**

(56) References cited:
**EP-A- 0 185 918** **EP-A- 0 351 392**

- **J. AM. CHEM. SOC., vol. 110, 1988, pages 6255-6256, American Chemical Society; J.A. EWEN et al.: "Syndiospecific propylene polymerizations with group 4 metallocenes"**
- **MACROMOLECULES, 1986, No. 19, pages 2703-2706; ZAMBELLI et al.: " C-Enriched end groups of polypropylene and poly(1-butene) prepared in the presence of bis(cyclopentadienyl)titanium diphenyl and methylalumoxane"**
- **TRANS. MET. ORGANOMET. CAT. OLEF. POLYM., 1988, pages 329-336; ZAMBELLI et al.**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 387 609 B1

## Description

This invention relates to new stereoregular crystalline polymers of alpha-olefins, wherein the recurring units represented by:

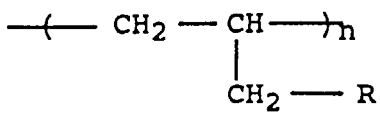

(I)

where R = $CH_3$,

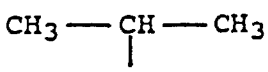 or 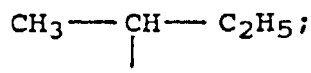;

and n is an integer number higher than 10, preferably higher than 50; and which have syndiotactic structure.

Isotactic crystalline polymers may be obtained by polymerizing 1-butene, 4-methyl-1-pentene, 4-methyl-1-hexene in the presence of heterogeneous catalysts of the Ziegler-Natta type including, for example, the reaction product of titanium halides with aluminum organometallic compounds.

Partially syndiotactic amorphous 1-butene polymers have been obtained by polymerizing the monomer with the $VCl_4$-$Al(C_2H_5)_2Cl$ catalytic system at -90°C [A. Zambelli et al.: Makromol Chem. 115,73 (1968)], or by hydrogenizing the syndiotactic poly-1,2-butadiene obtained by polymerizing 1,3-butadiene with catalysts which are the reaction product of organic compounds of titanium, vanadium, chromium, or molybdenum with aluminum trialkyls [G. Natta et al.: Atti Accad. naz. Lincei, Rend. Cl. Sci. fisiche mat. natur. Sez. VIII 28,452 (1960].

These polymers, however, present a number of steric as well as structural irregularities, the latter due to a partial head-to-head and tail-to-tail linking of the vinyl group and to the presence of units linked 1-4 in the syndiotactic poly-1,2-butadiene, which hinder the crystallization of the polymer.

Crystalline syndiotactic propylene and 1,3-butadiene polymers have been obtained, in the case of the propylene, with catalysts prepared from $VCl_4$ and $AlEt_2Cl$ and, in the case of butadiene, from halogen free organometallic compounds of titanium, vanadium, molybdenum or chromium, and aluminum organometallic compounds.

By using the catalysts above-mentioned, however, crystalline syndiotactic polymers of 1-butene, 4-methyl-1-pentene, 4-methyl-1-hexene cannot be obtained. It is also known that propylene polymerizes to syndiotactic polymer with catalysts obtained from isopropylidene-(cyclopentadienyl-1-fluorenyl)-zirconium dichloride and polymethyl-alumoxanes [J.A. Ewen et al. J.A.C.S. 110, 6255-56 (1988) and EP-A- 185918]. However, the application of said catalysts to polymerization of higher alpha-olefins, such as 1-butene or 4-methyl-1-pentene, is not known.

Surprisingly it has been found that by using particular catalytic systems it is possible to prepare stereoregular crystalline polymers of 1-butene, 4-methyl-1-pentene and 4-methyl-1-hexene, where the repeating units represented by diagram (I) above are syndiotactically enchained.

The catalyst systems that can be used for the preparation of syndiotactic crystalline polyalpha-olefins of the present invention, include the reaction product of components A and B.

A is an organometallic aluminum compound of the formula:

1) 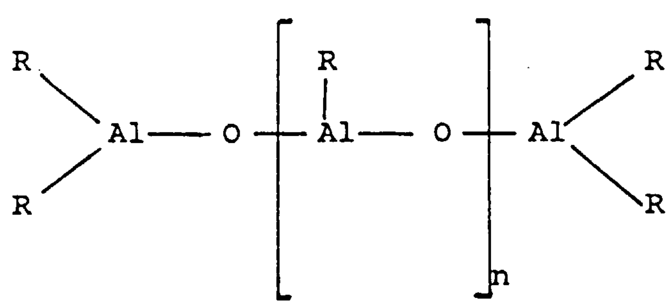

or

2)

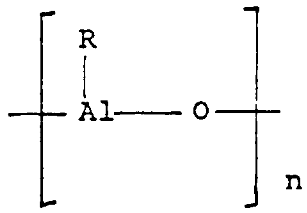

where n in 1) is 0 or an integer from 1 to 40, and in 2) is an integer from 2 to 40; R in both 1) and 2) is an alkyl, aryl, arylalkyl or cycloalkyl radical containing from l to 20 carbon atoms.

These aluminum compounds may be used alone or mixed with aluminum trialkyls or aluminium halogen alkyls, where the alkyl groups contain from 1 to 8 carbon atoms;

B is an organometallic compound of a transition metal of the formula:

$$RMX_2$$

where

R is an isopropylidene-(cyclopentadienyl-1-fluorenyl) group;
M = Zr or Hf;
X is halogen, hydrogen, alkyl, aryl, arylalkyl radical containing from 1 to 12 carbon atoms, -OR' (where R' is an alkyl, aryl, arylalkyl group containing from 1 to 12 C atoms), -OH, $-CH_2-Si(CH_3)_3$ radical, and the X substituents can be the same or different.

Figure 1 is the $^{13}C$ NMR spectrum of syndiotactic polybutene of the invention.
Figure 2 is the X-ray diffraction spectrum of the syndiotactic polybutene of the invention.
Figure 3 is the $^{13}C$ NMR spectrum of syndiotactic poly-4-methyl-1-pentene of the invention.
Figure 4 is the X-ray diffraction spectrum of the syndiotactic poly-4-methyl-1 pentene of the invention.
Figure 5 is the thermal stability curve of syndiotactic poly-4-methyl-1-pentene of the invention.
Figure 6 is the thermal stability curve of isotactic poly-4-methyl-1-pentene.
Figure 7 is the X-ray diffraction spectrum of syndiotactic poly-4-methyl-1-hexene.

The stereoregularity of the syndiotactic polybutene obtained with the above-mentioned catalytic systems is evidenced by the $^{13}C$ NMR spectrum of the polymer (Fig. 1).

The polymer crystallinity is shown in the X-ray diffraction spectrum (Cu K$\alpha$) which shows maxima of diffracted intensity for 2$\vartheta$ angles of 10.4°, 15.4° and 19.2° (Fig. 2).

The stereoregularity of syndiotactic poly-4-methyl-1-pentene is evidenced by the $^{13}C$ NMR spectrum of the polymer (Fig. 3 and table 1).

The polymer crystallinity is shown in the X-ray diffraction spectrum (Cu K$\alpha$) which shows maxima of diffracted intensity for 2$\vartheta$ angles of 9.75°, 13.9°, 17.0° and 18.4° (Fig. 4).

In figures 5 and 6 are reported the thermal stability curves for the syndiotactic and isotactic polymer, respectively. The syndiotactic polymer, although it has a lower melting point, shows a thermal stability surprisingly superior to the one for the isotactic polymer. This makes the syndiotactic poly-4-methyl-1-pentene a polymer particularly suited for applications requiring a high thermal stability.

The syndiotactic poly-4-methyl-pentene may also be obtained through hydrogenation of the syndiotactic poly-1,2-(4-methyl-1,3-pentadiene) prepared by using catalysts obtained from poly-methylalumunoxane and tetrabenzyl titanium.

The stereoregularity of the poly-4-methyl-1-hexene is evidenced by the $^{13}C$ NMR spectrum of the polymers. The crystallinity is shown in the X-ray diffraction spectra (Cu K$\alpha$) which show maxima of diffracted intensity for 2$\vartheta$ angles of 8.9°, 12.75° and 16.5° (Fig. 7).

The $^{13}C$ NMR spectra were done at 120°C. The samples were prepared by melting the polymers in tetrachloride-1,2-dideuteroethane.

The chemical shift-scale refers to the hexamethyldisiloxane ($\delta = 0$).

The syndiotactic crystalline polymers of the invention find application in the field of thermoplastic materials. In particular, as already indicated, the 4-methyl-1-pentene polymers are suited for applications requiring elevated thermal stability.

The following examples are given in order to illustrate the invention, without limiting the scope of same.

## Table 1

$^{13}C$ NMR chemical shifts[a)] of the poly-4-methyl-1-pentene signals relative to carbon atoms numbered in the formula:

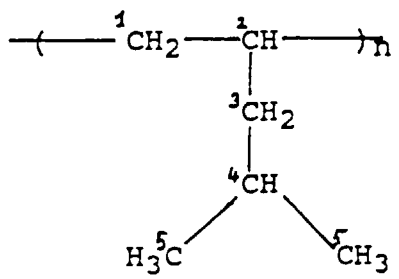

| carbon | chemical shifts |
|---|---|
| 1 | 40.60 |
| 2 | 29.14 |
| 3 | 43.63 |
| 4 | 23.57 |
| 5 | 21.30 |

a) The chemical shifts relate to the hexamethyldisiloxane ($\delta$ = 0). The spectra of the samples were done at 120°C in tetrachloro-1,2-dideuteroethane.

Example 1

In a 100 ml glass autoclave were introduced under nitrogen atmosphere, 25 ml of toluene and 1 ml of a 10% by weight solution of polymethylaluminoxane (MAO) in toluene (Shering). It was cooled to 0°C, and 20 ml of 1-butene were introduced; then a mixture of 2 ml of MAO and 2 mg of isopropylidene-(cyclopentadienyl-1-fluorenyl)zirconium dichloride was added. The reaction mixture was agitated for 18 hours at 0°C. After treatment with acidified methanol and hydrochloric acid, filtration, washing with methanol and drying, 12.1 g of polymer were isolated; X-ray analysis showed that this polymer was crystalline (Fig. 2).

Example 2

In a 50 ml glass reactor were introduced, under nitrogen atmosphere, 9 ml of MAO Shering solution (10% by weight), 3 mg of isopropylidene-(cyclopentadienyl-1-fluorenyl)zirconium dichloride and 15 ml of 4-methyl-1-pentene.

The reaction mixture was agitated for 17 hours at 20°C. Operating according to the procedure of example 1, 7.5 g of polymer were isolated; an X-ray analysis showed that this polymer was crystalline (Fig. 4).

By a differential thermal analysis the polymer showed a melt point of 196.6°C.

Example 3

In a 50 ml glass reactor were introduced, under nitrogen atmosphere, 8 ml of toluene, 8 ml of 4-methyl-1-hexene and 5 ml of toluene solution containing 155 mg of polymethylalumoxane and 2.1 mg of isopropylidene-(cyclopentadienyl-1-fluorenyl)zirconium dichloride. The reaction mixture was agitated for 20 hours at 20°C. Operating according to the procedure of example 1, 1.61 g of polymer were isolated; X-ray analysis showed that this polymer was crystalline (Fig. 7).

By a differential thermal analysis the polymer showed a melt point of 146.6°C.

Example 4 (starting polymer for Example 5)

5 ml of benzene, 0.1 moles of 4-methyl-1,3-pentadiene, 0.6 mmoles of polymethylaluminoxane and 0.005 mmoles of titanium tetrabenzyl were introduced in a 250 ml vial at 20°C and maintained in contact for 72 hours at such temperature.

0.5 g of syndiotactic poly-1,2-(4-methyl-1,3-pentadiene) was obtained.

Example 5

0.5 g of poly-1,2-(4-methyl-1,3-pentadiene), prepared according to the procedure of example 4, was dissolved in 50 ml of n-octane and 0.5 ml of 1,2,4-trichlorobenxene, and hydrogenated in an oscillating autoclave in the presence of 0.5 g of Pd supported on carbon (10% by weight) at 45 atm of hydrogen for 72 hours at a temperature of 150°C. The solution was then filtered on silica, and the hydrogenated polymer recovered by coagulation with ethanol.

An X-ray analysis showed that this polymer was crystalline and a differential thermal analysis showed that it had a melt point of 196.5°C

The average molecular weight of the polymer, obtained relative to polystyrene at 135°C in orthodichlorobenzene, was 176,000.

**Claims**

1. A crystalline syndiotactic polymer of 1-butene, 4-methyl-1-pentene or 4-methyl-1-hexene, wherein the recurring units are represented by:

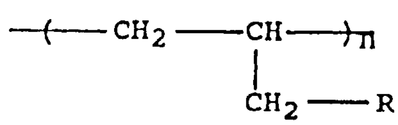

where R is $CH_3$,

$$CH_3-CH-CH_3 \text{ or } CH_3-CH-C_2H_5,$$

n is an integer higher than 10.

2. Poly-4-methyl-1-pentene according to claim 1, having a thermal stability greater than 98 % at temperatures up to 350°C.

3. A polymerization process for preparing crystalline syndiotactic polymers of 1-butene, 4-methyl-1-pentene or 4-methyl-1-hexene, as defined in claim 1, said polymerization process being carried out in the presence of a catalyst system which comprises the reaction product of components A and B, wherein:

- A is an organometallic compound of the formula:

1) 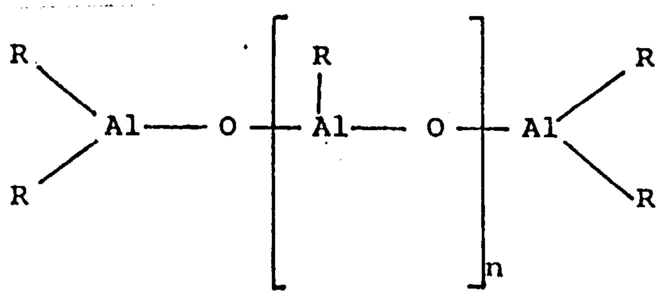

or

2) 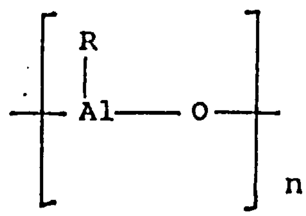

where n in formula 1 is 0 or an integer from 1 to 40 and in formula 2 is an integer from 2 to 40; R in both 1 and 2 is an alkyl, aryl, arylaklyl or cycloalkyl radical containing from 1 to 20 carbon atoms; and

- B is an organometallic compound of the formula:

$$RMX_2$$

where R is an isopropylidene-(cyclopentadienyl-1-fluorenyl) group; M is Zr or Hf; X is halogen, hydrogen, alkyl, aryl, arylalkyl radical containing from 1 to 12 carbon atoms, -OR' (where R' is an alkyl, aryl, arylalkyl group containing from 1 to 12 carbon atoms), -OH, $-CH_2Si(CH_3)_3$ radical, and the X substituents are the same or different.

**4.** A manufactured article obtained from a polybutene of claim 1.

**5.** A manufactured article obtained from the poly-4-methyl-1-pentene of claim 2.

**6.** A manufactured article obtained from the poly-4-methyl-1-hexene of claim 1.

**Patentansprüche**

**1.** Kristallines, syndiotaktisches Polymeres von 1-Buten,4-Methyl-1-penten oder 4-methyl-1-hexen, worin die wiederkehrenden Einheiten dargestellt sind durch

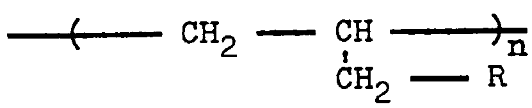

worin R für $CH_3$,

$CH_3-CH-CH_3$ oder $CH_3-CH-C_2H_5$

steht und n für eine ganze Zahl von höher als 10 steht.

**2.** Poly-4-methyl-1-penten gemäß Anspruch 1 mit einer thermischen Stabilität von höher als 98% bei Temperaturen bis zu 350°C.

**3.** Polymerisationsverfahren zur Herstellung von kristallinen, syndiotaktischen Polymeren von 1-Buten, 4-Methyl-1-penten oder 4-Methyl-1-hexen, wie in Anspruch 1 definiert, wobei dieses Polymerisationsverfahren in Anwesenheit eines Katalysatorsystems durchgeführt wird, das das Reaktionsprodukt der Komponenten A und B umfaßt, worin

- A eine organometallische Verbindung der Formel

1)

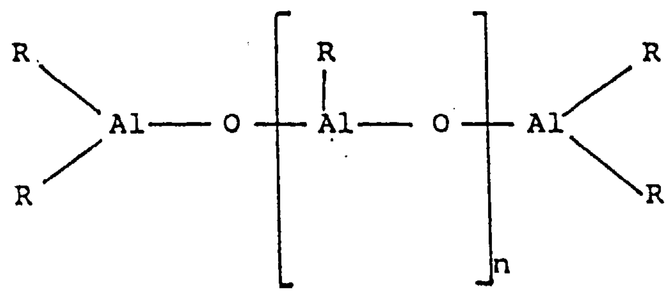

oder

2)

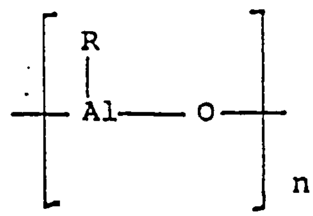

ist, worin n in Formel 1 für 0 oder eine ganze Zahl von 1 bis 40 und in Formel 2 für eine ganze Zahl von 2 bis 40 steht; R in beiden Formeln 1 und 2 einen Alkyl-, Aryl-, Aralkyl- oder Cycloalkylrest mit 1 bis 20 Kohlenstoffatomen bedeutet; und
- B eine organometallische Verbindung der Formel

$$RMX_2$$

darstellt, worin R eine Isopropyliden-(cyclopentadienyl-1-fluorenyl)-Gruppe darstellt; M für Zr oder Hf steht; X für Halogen, Wasserstoff, Alkyl, Aryl, Aralkyl mit 1 bis 12 Kohlenstoffatomen, -OR' (worin R' ein Alkyl-, Aryl-, Aralkylrest mit 1 bis 12 Kohlenstoffatomen ist), -OH, $-CH_2Si(CH_3)_3$ steht und die X-Substituenten gleich oder voneinander verschieden sind.

**4.** Erzeugnis, erhalten aus einem Polybuten gemäß Anspruch 1.

**5.** Erzeugnis, erhalten aus Poly-4-methyl-1-penten gemäß Anspruch 2.

**6.** Erzeugnis, erhalten aus Poly-4-methyl-1-hexen gemäß Anspruch 1.

## Revendications

1. Un polymère syndiotactique cristallin de 1-butène, 4-méthyl-1-pentène ou de 4-méthyl-1-hexène, dont les motifs récurrents sont représentés par:

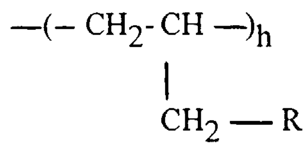

(I)

dans laquelle:

R

= $CH_3$, $CH_3$-CH-$CH_3$ ou $CH_3$-CH-$C_2H_5$;

ouet

n est un nombre entier supérieur à 10.

2. Poly-4-méthyl-1-pentène selon la revendication 1, présentant une stabilité thermique supérieure à 98 % jusqu'à une température atteignant 350°C.

3. Un procédé de polymérisation pour la préparation de polymères syndiotactiques cristallins de 1-butène, 4-méthyl-1-pentène ou 4-méthyl-1-hexène, selon la revendication 1, ledit procédé de polymérisation étant mis en oeuvre en présence d'un système catalytique qui comprend le produit de la réaction des constituants A et B, dans lesquels:

A est un dérivé organométallique de l'aluminium de formule:

(1)

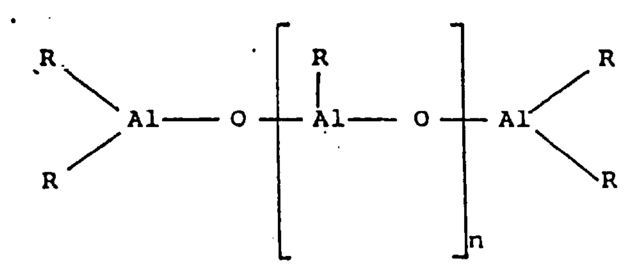

ou

(2)

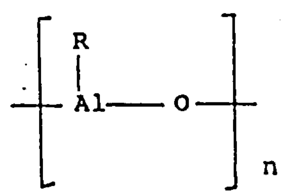

dans laquelle:

n dans la formule 1) est égal à 0 ou est un nombre entier de 1 à 40, et dans la formule 2) est un nombre entier de 2 à 40;
r dans la formule 1) et dans la formule 2) est un radical alkyle, aryle, arylalkyle ou cycloalkyle comportant 1 à 20 atomes de carbone; et

B est un dérivé organométallique de formule:

$$RMX_2$$

où

R est un groupe isopropylidène-(cyclopentadiényl-1-fluorényle);
M = est égal à Zr ou Hf;
X est un halogène, un hydrogène, un radical alkyle, aryle, arylalkyle comportant 1 à 12 atomes de carbone, -OR' (où R' est un groupe alkyle, aryle, arylalkyle comportant 1 à 12 atomes de carbone), -OH, un radical $-CH_2-Si(CH_3)_3$,

et les substituants X peuvent être identiques ou différents.

**4.** Un article manufacturé obtenu à partir d'un polybutène selon la revendication 1.

**5.** Un article manufacturé obtenu à partir d'un poly-4-méthyl-1-pentène selon la revendication 2.

**6.** Un article manufacturé obtenu à partir d'un poly-4-méthyl-1-hexène selon la revendication 1.

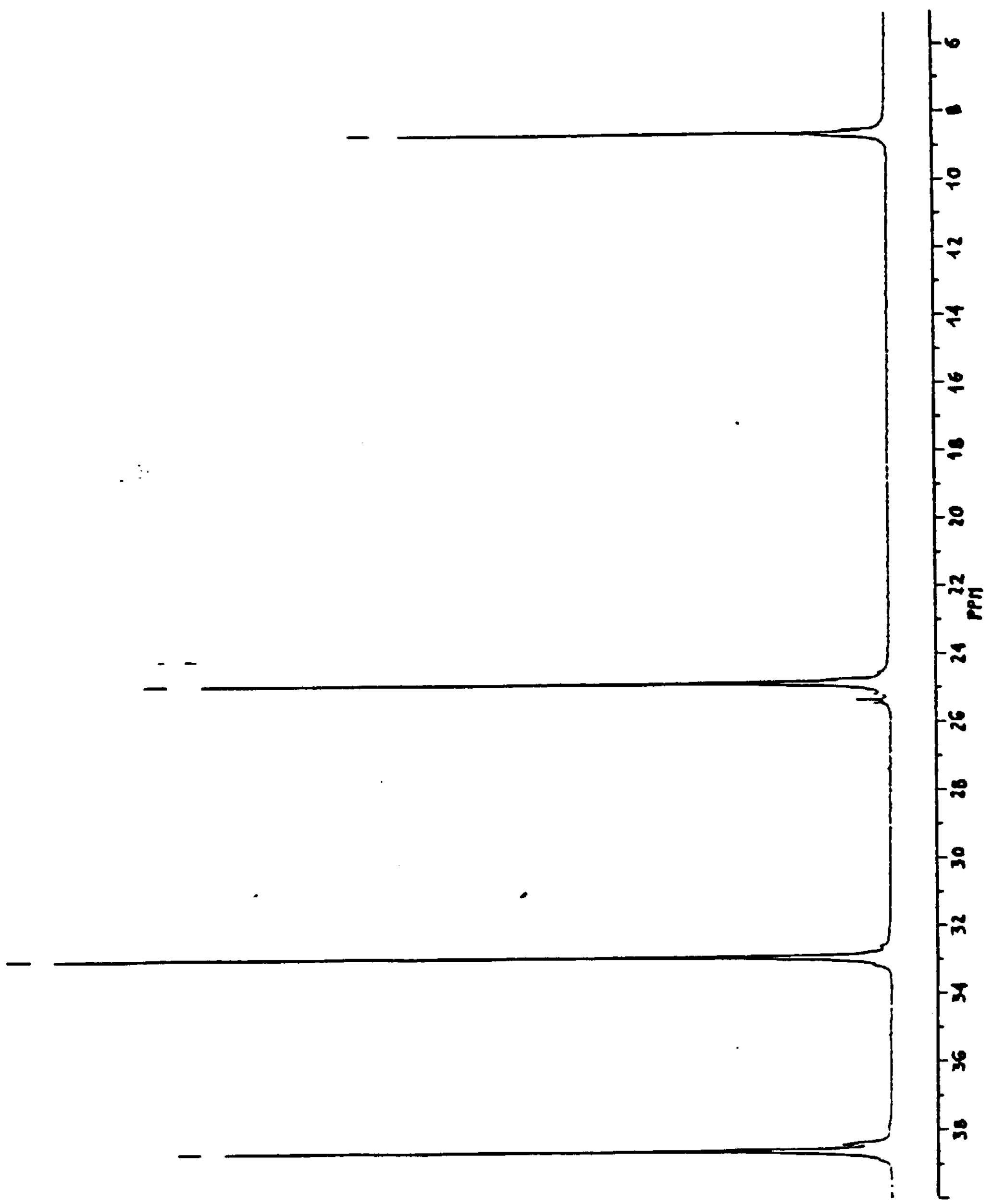


FIG. 1

FIG. 2

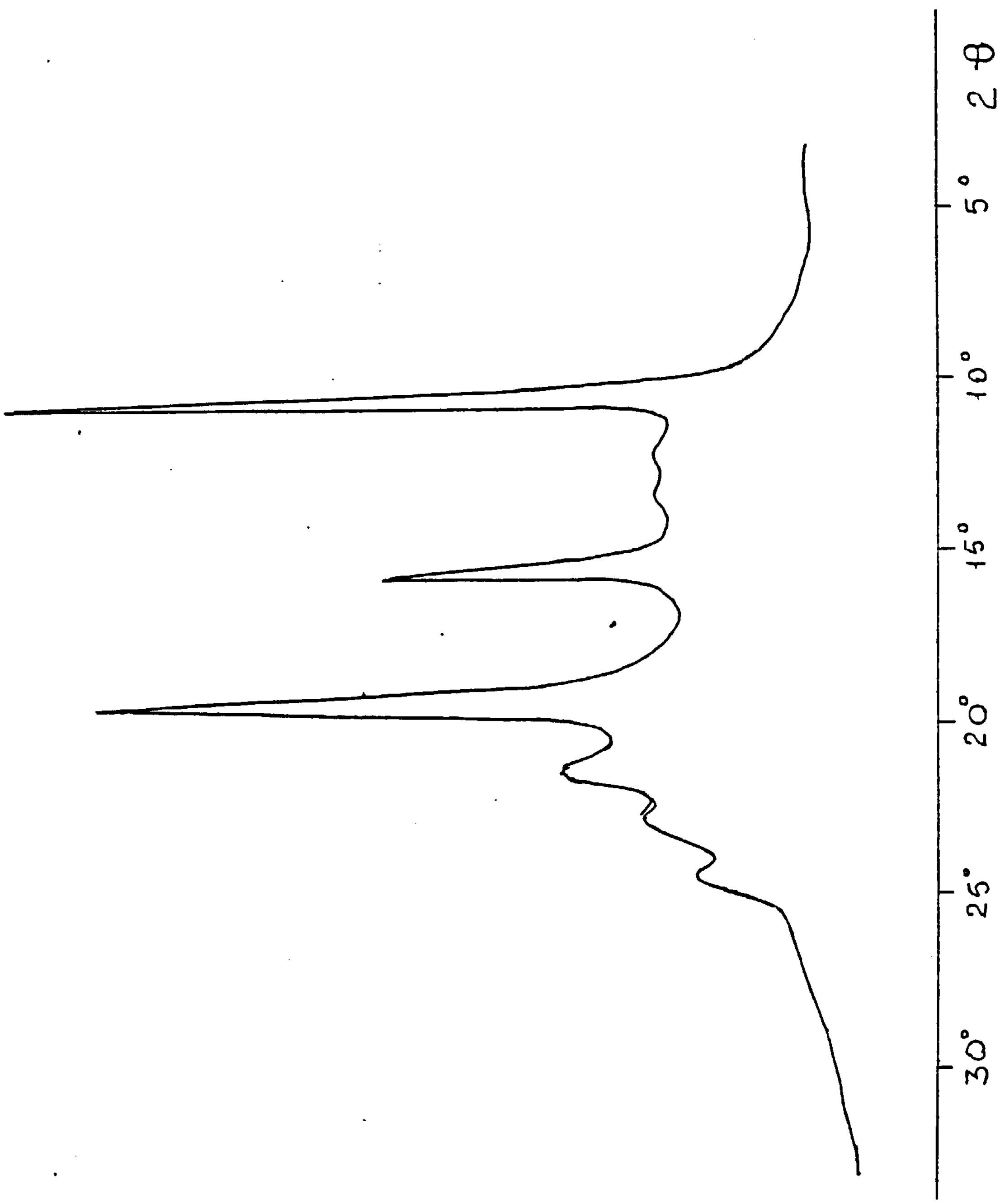

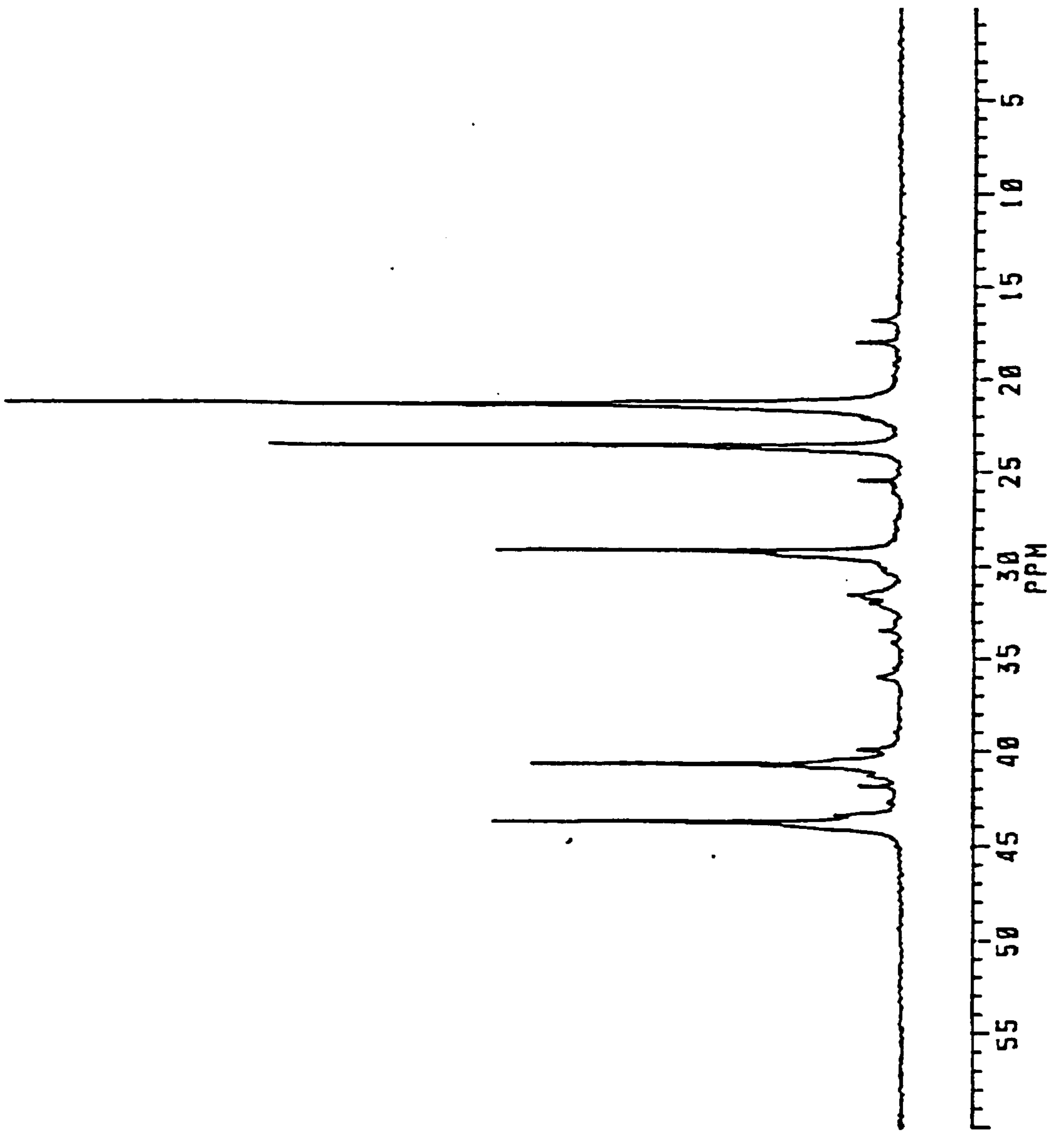


FIG. 3

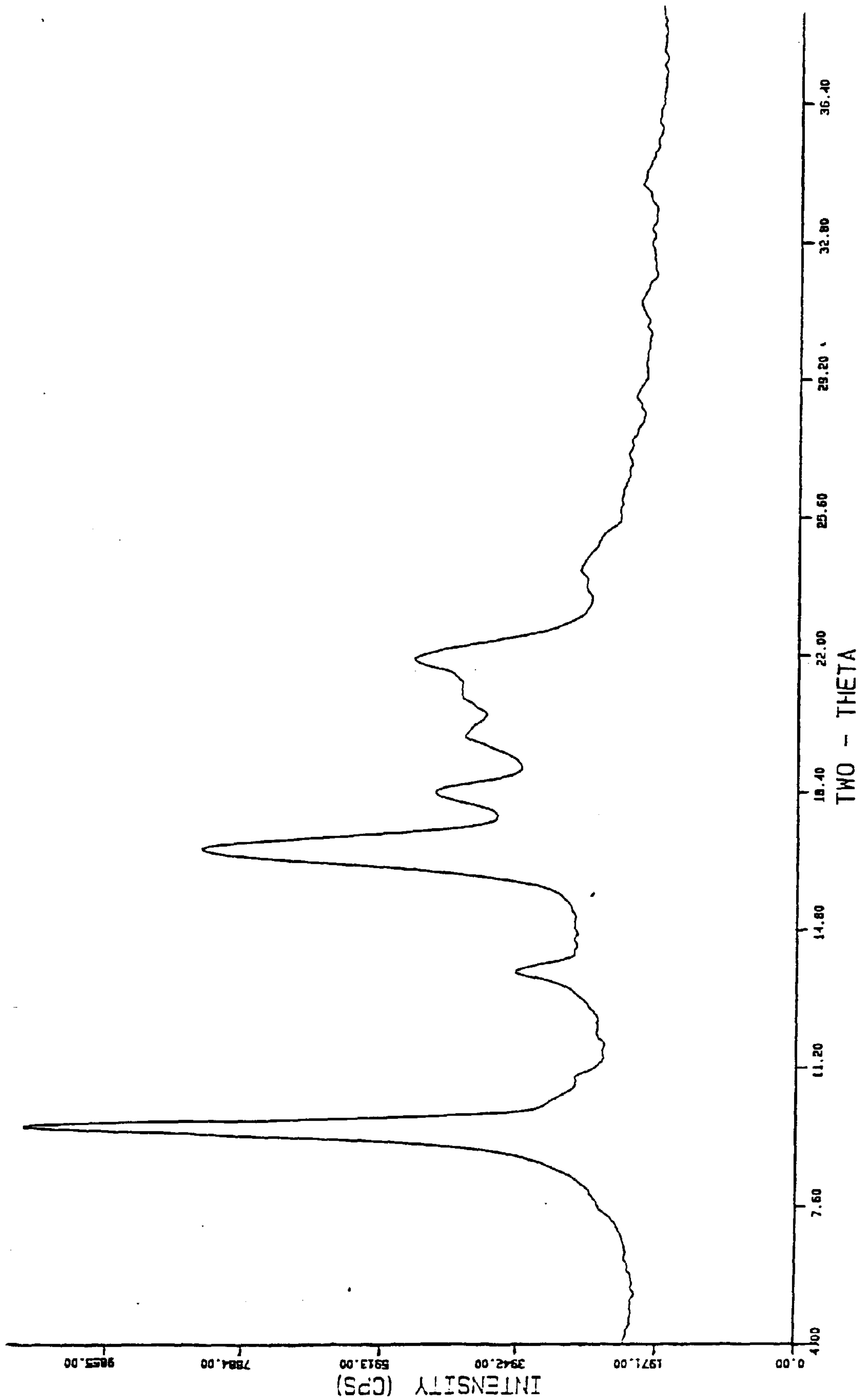
4.00
7.60
11.20
14.80
18.40
22.00
25.60
29.20
32.80
36.40
TWO - THETA
0.00
1971.00
3942.00
5913.00
7884.00
9855.00
INTENSITY (CPS)

FIG. 4

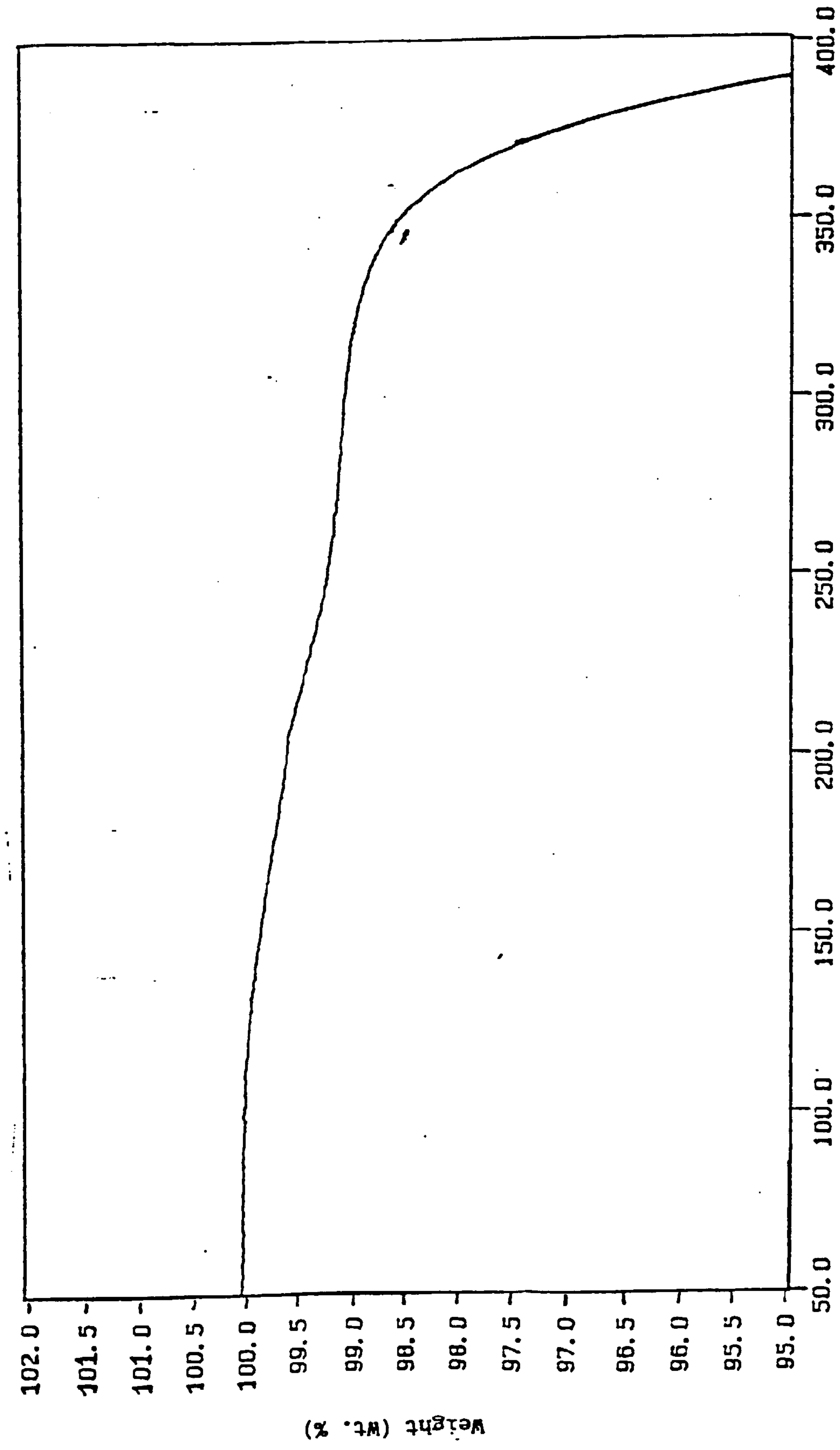
Weight (wt. %)
102.0
101.5
101.0
100.5
100.0
99.5
99.0
98.5
98.0
97.5
97.0
96.5
96.0
95.5
95.0
50.0
100.0
150.0
200.0
250.0
300.0
350.0
400.0

FIG. 5

Tavola No. 6

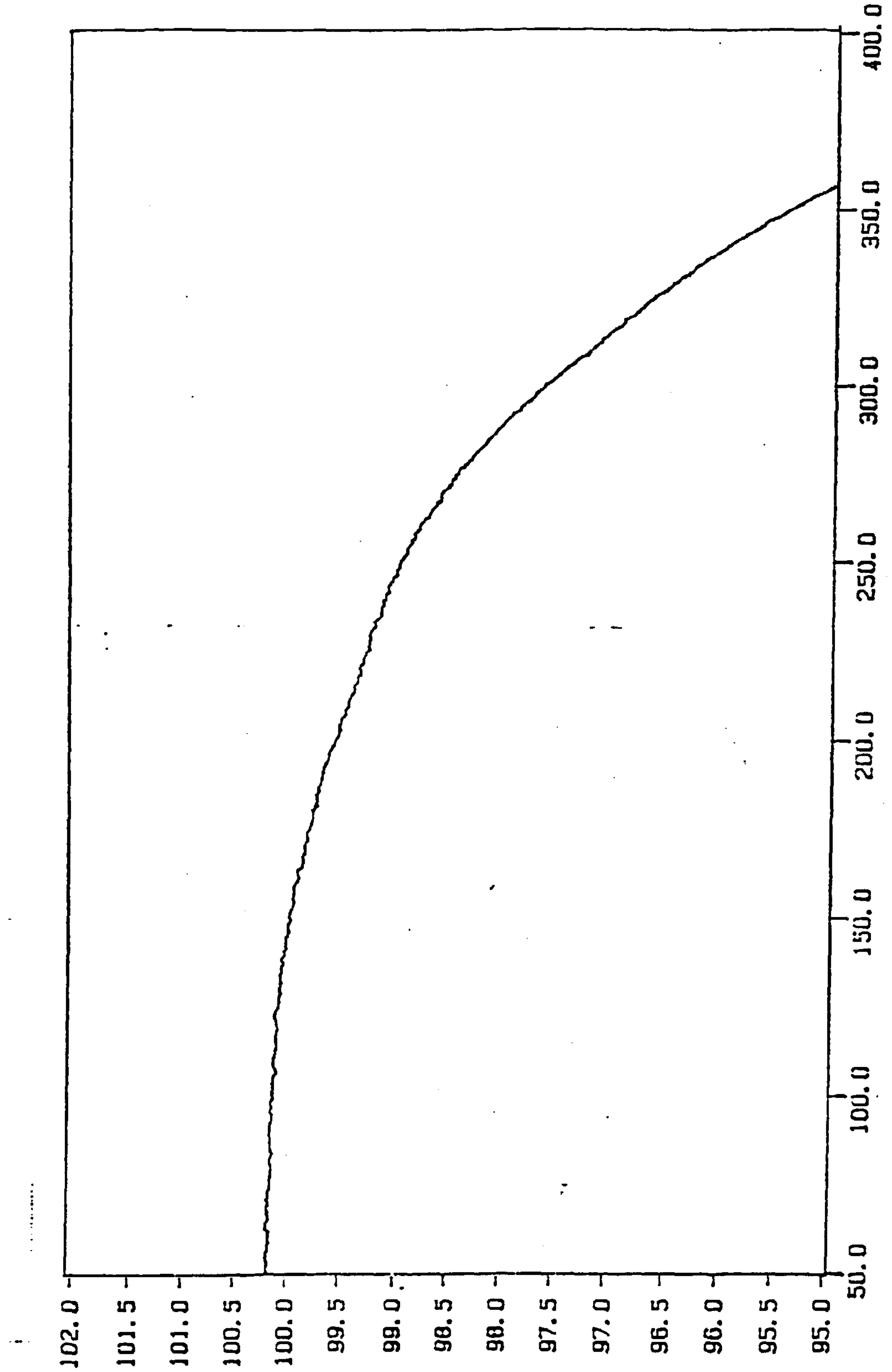


FIG. 6

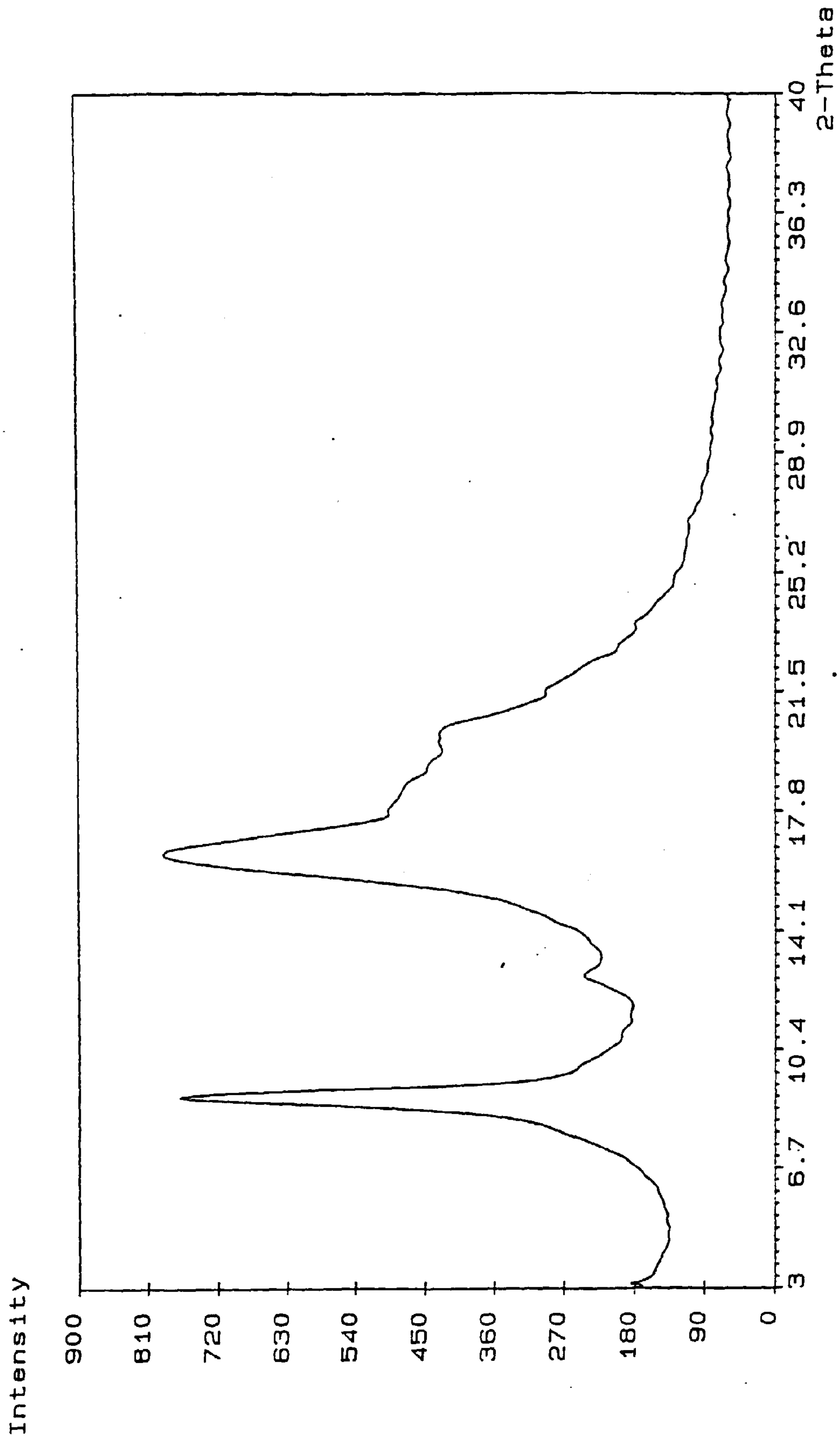
Intensity
900
810
720
630
540
450
360
270
180
90
0
3
6.7
10.4
14.1
17.8
21.5
25.2
28.9
32.6
36.3
40
2-Theta

FIG. 7